# EUROPÄISCHE PATENTSCHRIFT

(11) **EP 2 697 008 B1**
(45) Veröffentlichungstag und Bekanntmachung des Hinweises auf die Patenterteilung: **21.08.2019**
(21) Anmeldenummer: 12715015.9
(22) Anmeldetag: 03.04.2012
(51) Int. Cl.: B21F 3/02

(54) **VERFAHREN UND FEDERMASCHINE ZUR HERSTELLUNG VON FEDERN**
PROCESS AND DEVICE FOR THE MANUFACTURE OF SPRINGS
PROCÉDÉ ET MACHINE DE PRODUCTION DE RESSORTS

(30) Priorität: 12.04.2011 DE 102011007183
(43) Veröffentlichungstag der Anmeldung: 19.02.2014
(73) Patentinhaber: WAFIOS AG, 72764 Reutlingen (DE)
(72) Erfinder: WEIGMANN, Uwe-Peter, 72622 Nürtingen (DE); JANNOTTI, Alexander, 72818 Trochtelfingen-Steinhilben (DE); SIGG, Andreas, 72829 Engstingen (DE); SAUTTER, Dietmar, 72805 Lichtenstein (DE)
(74) Vertreter: Patentanwälte Ruff, Wilhelm, Beier, Dauster & Partner mbB
(86) Internationale Anmeldenummer: PCT/EP2012/056065
(87) Internationale Veröffentlichungsnummer: WO 2012/139932

(56) Entgegenhaltungen:
- EP-A1- 1 637 251
- EP-B1- 0 804 978
- DE-A1- 19 938 905
- DE-B4- 10 134 826

## Beschreibung

### Technisches Gebiet

Die Erfindung bezieht sich auf ein Verfahren zur Herstellung von Federn mittels einer numerisch gesteuerten Federmaschine gemäß dem Oberbegriff von Anspruch 1 sowie auf eine zur Durchführung des Verfahrens geeignete Federmaschine gemäß dem Oberbegriff von Anspruch 5 (siehe z.B. DE 199 38 905 A1).

### Stand der Technik

Federn sind Maschinenelemente, die in zahlreichen Anwendungsbereichen in großen Stückzahlen und unterschiedlichen Ausgestaltungen benötigt werden. Federn der hier interessierenden Art werden üblicherweise aus Federdraht oder Federband durch Kaltverformung herstellt. Es gibt viele unterschiedliche Federtypen. Schraubenfedern, die auch als gewundene Torsionsfedern bezeichnet werden, werden im bestimmungsgemäßen Gebrauch überwiegend in Richtung ihrer Federachse belastet und können je nach der bei der Nutzung vorliegenden Belastung als Zugfedern oder Druckfedern ausgelegt sein. Der Federdurchmesser ist bei zylindrischen Schraubenfedern über die Länge der Federn konstant, er kann aber auch über die Länge variieren, wie z.B. bei kegelförmigen oder tonnenförmigen Schraubenfedern. Als Schenkelfedern bezeichnet man Schraubenfedern, die dafür konstruiert sind, im Gebrauch um ihre Federachse auf Torsion beansprucht zu werden. Spiralfedern sind flache gewundene Biegefedern

Federmaschinen sind Umformmaschinen, die mit Hilfe geeigneter Werkzeuge aus Halbzeugen wie Draht, Band oder dergleichen in einem automatischen Fertigungsprozess kleinere bis sehr große Serien von Federn mit teilweise komplexer Federgeometrie überwiegend durch Umformen erzeugen können. In dieser Anmeldung wird der Begriff "Draht" als Synonym für Draht, Band und dergleichen Werkstücke verwendet. Eine Federmaschine kann zur Herstellung von Druckfedern, Zugfedern, Schenkelfedern, Spiralfedern oder anderen federartigen Formteilen konstruiert sein. Zu den Federmaschinen gehören insbesondere die Federwindemaschinen und Federwickelmaschinen.

Eine computernumerisch gesteuerte, mehrachsige Federmaschine hat mehrere steuerbare Maschinenachsen, ein Antriebssystem mit mehreren Antrieben zum Antreiben der Maschinenachsen und eine Steuereinrichtung zur koordinierten Ansteuerung von Arbeitsbewegungen der Maschinenachsen in einem Fertigungsprozess gemäß einem für den Fertigungsprozess spezifischen, computerlesbaren Steuerprogramm. Der Begriff "Maschinenachse" bezeichnet allgemein eine bewegliche Einrichtung, die durch mindestens einen Antrieb, z.B. einen elektromechanischen, elektrohydraulischen oder elektropneumatischen Antrieb, in mindestens einem mechanischen Freiheitsgrad bewegt werden kann. Es kann sich um eine translatorische Maschinenachse handeln, die beispielsweise einen linear beweglichen Schlitten bewegt, oder um eine rotatorische Maschinenachse, beispielsweise eine Spindel. Eine Maschinenachse kann entweder ein Werkzeug bewegen oder das Werkstück.

Schraubenfedern werden heutzutage häufig durch Federwinden mit Hilfe numerisch gesteuerter Federwindemaschinen hergestellt. Dabei wird ein Draht (Federdraht) unter der Steuerung durch ein Steuerprogramm mittels einer Zufuhreinrichtung einer Umformeinrichtung der Federwindemaschine in einer Zufuhrrichtung zugeführt und mit Hilfe von Werkzeugen der Umformeinrichtung zu einer Schraubenfeder umgeformt. Zu den Werkzeugen gehören in der Regel ein oder mehrere bezüglich ihrer Stellung mechanisch oder motorisch einstellbare Windestifte zur Festlegung und ggf. zur Veränderung des Durchmessers von Federwindungen. Häufig sind zusätzlich ein oder mehrere Steigungswerkzeuge vorgesehen, durch die die lokale Steigung der Federwindungen in jeder Phase des Fertigungsprozesses bestimmt wird.

Eine Schneideinheit mit einem beweglichen Schneidwerkzeug dient zum Abtrennen der fertigen Feder vom Ausgangsmaterial. Als Gegenelement für das Schneidwerkzeug dient ein Dorn (Abschneiddorn), der sich im Inneren der sich entwickelnden Feder befindet und eine Schneidkante aufweist, die beim Abtrennen mit dem Schneidwerkzeug zusammenwirkt.

Der Abschneiddorn ist ein zentrales Werkzeug beim Abschneidvorgang. Er unterliegt während des Abschneidvorgangs einer hohen Stoßbelastung. Er wird bei bekannten Federwindemaschinen in einem sogenannten Dornkasten aufgenommen. Der Dornkasten wird von einem linear verfahrbaren Dornschlitten getragen, der die beweglichen Schneidwerkzeuge und deren Antriebe trägt. Der Dornkasten kann ggf. innerhalb des Dornschlittens parallel zur Federlängsachse verschoben werden. Diese axiale Verschiebemöglichkeit kann im Herstellungsprozess für die axiale Verschiebung des Abschneiddorns genutzt werden. Dies wird auch als "Dornverschiebung" bezeichnet und kann optional mit einem Servomotor angetrieben werden. Die Funktion "Dornverschieben" wird z.B. bei der Herstellung von Formfedern genutzt, wenn es während des Herstellungsprozesses zu Kollisionen des Drahts mit dem Abschneiddorn kommen würde. In diesem Fall wird der Abschneiddorn durch die axiale Bewegung des Dornkastens aus dem Kollisionsbereich der Feder herausgefahren. Nach dem Formen der Feder wird zum Abschneiden der Feder der Abschneiddorn mit dem Dornkasten wieder in die Schnittposition gefahren. Diese Konstruktion erlaubt eine hohe Flexibilität für den Herstellungsprozess. Die Konstruktion kann aufwendig sein, um im Hinblick auf die auftretenden Kräfte beim Abschneiden ausreichende Stabilität zu gewährleisten.

Die Patentschrift DE 101 34 826 B4 zeigt eine Federwindemaschine mit einer Zufuhreinrichtung, die mit einem Paar von Zuführrollen ausgestattet ist, die mit jeweils zugeordneten Antriebseinrichtungen gemeinsam mit einer Drahtführung auf einem Tisch gelagert sind, der bezüglich der Werkzeugeinheiten in einer auf- und abgehenden Richtung bewegt werden kann. Die Zuführrollen sind in ihrer Stellung bezüglich der Werkzeugeinheiten veränderbar gelagert. Dadurch kann die gegenseitige Position zwischen der Zufuhrrichtung und den Werkzeugeinheiten leicht eingestellt werden. Das soll insbesondere bei dünnen Drähten vorteilhaft sein, weil dann ein für die Bearbeitungsgenauigkeit ungünstiges Vorstehen eines Drahtes dadurch verhindert werden kann, dass eine Drahtformung unmittelbar im Bereich vor dem distalen Endabschnitt der Drahtführung vorgenommen werden kann.

Federwickelmaschinen haben als zentrales Element einen Wickeldorn, der bei der Herstellung einer gewickelten Feder über eine rotatorische Maschinenachse um seine Drehachse drehend angetrieben wird. Die Patentschrift EP 0 804 978 B1 zeigt eine Federwickelmaschine, die eine Zufuhreinrichtung hat, die den Federdraht in einer senkrecht zur Drehachse des Wickeldorns verlaufenden Zufuhrrichtung zuführen kann. Die Zufuhreinrichtung kann im Verhältnis zum Wickeldorn sowohl parallel zu der Zufuhrrichtung als auch quer zur Drehachse des Wickeldorns gesteuert angetrieben werden, um den Berührungspunkt des Drahtes und des Wickeldorns zu verändern. Damit ist es möglich, ohne Austausch des Wickeldorns Federn mit entgegengesetzten Wickelrichtungen herzustellen.

Die EP 1 637 251 A1 beschreibt einen Drahtzuführungsmechanismus für eine Federmaschine zur Herstellung von Federn aus Draht. Eine Zufuhreinrichtung, die den Draht in Richtung einer Umformeinrichtung der Federmaschine zuführt, ist in der Lage, Bewegungen in drei Dimensionen, nämlich parallel zur Zuführrichtung und in einer Ebene senkrecht zur Zuführeinrichtung zu erzeugen. Dadurch ist die Federmaschine in der Lage, unterschiedliche komplizierte Federn herzustellen.

### ZUSAMMENFASSUNG DER ERFINDUNG

Es ist eine Aufgabe der Erfindung, ein Verfahren zur Herstellung von Federn mittels einer numerisch gesteuerten Federmaschine bereitzustellen, welches die Herstellung von Federn unterschiedlicher und ggf. komplizierter Federgeometrie vereinfacht. Es ist eine weitere Aufgabe, eine zur Durchführung des Verfahrens konfigurierte Federmaschine bereitzustellen, die bei günstigen Herstellkosten ein hohes Maß an Fertigungsqualität und Flexibilität bietet.

Zur Lösung dieser Aufgaben stellt die Erfindung ein Verfahren mit den Merkmalen von Anspruch 1 sowie eine Federmaschine mit den Merkmalen von Anspruch 5 bereit.

Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die beanspruchte Erfindung kann bei Federmaschinen umgesetzt werden, indem die Zufuhreinrichtung nicht ortsfest am Maschinenkörper montiert ist, sondern mindestens einen Freiheitsgrad der Bewegung quer zur Zufuhrrichtung hat und mit Hilfe einer zugehörigen steuerbaren Maschinenachse unter Kontrolle der Steuerung der Federmaschine während einer Umformoperation gezielt bezüglich seiner Lage und/oder Orientierung verstellt werden kann. Dadurch können unterschiedliche Herstellungsprozesse für Federn optimiert werden. Gleichzeitig ist es in manchen Fällen möglich, die Federmaschine an anderen Stellen konstruktiv zu vereinfachen und so bei mindestens gleichbleibender Qualität der hergestellten Federn die Herstellkosten zu senken.

Vorzugsweise ist vorgesehen, dass bei der Umformoperation eine Feder mit Wicklungen unterschiedlicher Wicklungsdurchmesser erzeugt wird und der Dorn während der Umformoperation keine Bewegungen senkrecht zur Dornachse ausführt. Der Dorn kann bis zum Abtrennen der fertigen Feder vom zugeführten Draht an der gleichen Stelle verbleiben, allenfalls lineare Bewegungen parallel zur Dornachse können vorgesehen sein. Eine bezüglich Querbewegungen "feste" Anordnung des Dorns kann erhebliche konstruktive und funktionale Vorteile bringen, die unten näher erläutert werden.

Bei manchen Ausführungsformen ist die Zufuhreinrichtung mittels einer ggf. geregelten translatorischen Maschinenachse senkrecht zur Zufuhrrichtung linear verfahrbar. Hierdurch wird eine Parallelverschiebung der Drahtzufuhrrichtung erreicht, die ggf. während der Umformoperation durchgeführt werden kann. Bei anderen Ausführungsformen ist die Zufuhreinrichtung als Ganzes um eine parallel zur Dornachse verlaufende Schwenkachse mittels einer entsprechenden Maschinenachse, z.B. einer rotatorischen Maschinenachse, gesteuert verschwenkbar. Auch diese Bewegung kann bei Bedarf während der Umformoperation durchgeführt werden.

Eine Klasse von Federmaschinen zeichnet sich dadurch aus, dass die Federmaschine als Federwickelmaschine konfiguriert ist und der Dorn ein Wickeldorn ist, der mittels einer rotatorischen Maschinenachse um die Dornachse mit vorgebbarer Drehgeschwindigkeit bzw. vorgebbarem Drehgeschwindigkeitsprofil gedreht werden kann. Vorzugsweise kann der Wickeldorn zusätzlich mittels einer translatorischen Maschinenachse parallel zur Dornachse verfahren werden.

Eine solche Federwickelmaschine kann beispielsweise dazu benutzt werden, bei der Umformoperation eine Spiralfeder zu erzeugen. Dazu wird bei einer bevorzugten Verfahrensvariante zunächst die Lage und/oder Orientierung der Zufuhreinrichtung so eingestellt, dass vor Beginn der Herstellung einer neuen Spiralfeder das freie vordere Drahtende in einen Querschlitz des Wickeldorns eingeführt werden kann. Danach wird der Draht mittels der Zufuhreinrichtung in den Querschlitz eingeführt. Danach erfolgt die weitere Umformoperation, indem der Draht unter Drehung des Wickeldorns zugeführt wird. Dabei kann der Wickeldorn als Einzugselement fungieren und der Eingriff der Zufuhreinrichtung vom Draht gelöst werden. Es ist auch möglich, den Draht weiterhin mittels der Zufuhreinrichtung zuzuführen bzw. zu fördern, so dass der Wickeldorn ggf. nur das Aufwickeln der Federwindungen zu übernehmen braucht.

Während des Wickelns werden dann die Lage und/oder die Orientierung der Zufuhreinrichtung derart verändert, dass die durch die Zufuhreinrichtung definierte Zufuhrrichtung immer im Wesentlichen tangential zu einer gerade entstehenden Wicklung der Feder verläuft. Bei einer ebenen Spiralfeder nimmt dabei der Wicklungsdurchmesser immer weiter zu. Wenn in jeder Phase des Aufwickelns die Zufuhrrichtung im Wesentlichen tangential zum Außenumfang der sich entwickelnden Spiralfeder verläuft, kann erreicht werden, dass der Draht zwischen dem Austritt aus der Zufuhreinrichtung bzw. einer Führungseinrichtung der Zufuhreinrichtung und dem Aufwickeln am Umfang der Spiralfeder praktisch nicht verbogen wird, so dass eine plastische Deformation in diesem Bereich vermieden werden kann. Hierdurch sind Spiralfedern mit hoher Qualität und guter Reproduzierbarkeit herstellbar. Außerdem ist ein platzsparender kompakter Aufbau möglich, da der Austritt der Zufuhreinrichtung sehr nahe an den Bereich des Wickeldorns herangebracht werden kann.

Bei einer anderen Klasse von Federmaschinen ist die Federmaschine als Federwindemaschine zur Herstellung von Schraubenfedern durch Federwinden konfiguriert. Die Umformeinrichtung hat dabei mindestens ein Windewerkzeug, welches im Wesentlichen den lokalen Durchmesser einer sich entwickelnden Schraubenfeder an einer vorgebbaren Position bestimmt. In der Regel ist weiterhin mindestens ein Steigungswerkzeug vorgesehen, dessen Eingriff an einer sich entwickelten Schraubenfeder die lokale Steigung der Schraubenfeder bestimmt. Dies ist aber nicht zwingend. Federwindemaschinen der hier betrachteten Art haben weiterhin eine Schneideinheit, die dafür vorgesehen ist, eine fertig hergestellte Feder mit Hilfe eines über eine geeignete Maschinenachse bewegbaren Schneidwerkzeugs vom zugeführten Draht abzutrennen. Bei diesen Maschinen dient der Dorn als Gegenelement für das Schneidwerkzeug während des Schnittvorgangs und wird daher auch als "Abschneidedorn" bezeichnet.

Der Dorn (Abschneidedorn) ist vorzugsweise in einem sogenannten Dornkasten aufgenommen und kann durch Verfahren bzw. Verschieben des Dornkastens parallel zur Dornachse linear verschoben werden. Bei manchen Ausführungsformen ist hierzu eine eigene gesteuerte Maschinenachse vorgesehen.

Der Abschneidedorn ist ein zentrales Werkzeug beim Abschneidevorgang. Er unterliegt einer hohen Stoßbelastung während des Abschneidevorgangs. Um Stillstandzeiten der Federwindemaschine gering halten zu können, ist es wünschenswert, dass der Abschneidedorn schnell aus- und wieder eingebaut werden kann. Andererseits muss der Abschneidedorn im Dornkasten während des Betriebs fest eingespannt sein, um die hohen und stoßartigen Schnittkräfte aufnehmen zu können. Die Konstruktion im Bereich des Dornkastens bzw. des Abschneidedorns kann somit relativ komplex sein.

Für den Abschneideprozess sollte sichergestellt sein, dass der Abschneidedorn an der Innenseite der Federwicklung anliegt, an der der Schnitt mit Hilfe des beweglichen Schneidwerkzeugs erfolgen soll, um Deformationen der fertig gestellten Feder durch den Schneidvorgang zu vermeiden. Weiterhin sollte es möglich sein, mit einer Federwindemaschine sowohl rechtsgängige als auch linksgängige Federn herstellen zu können. Schließlich gibt es zahlreiche Federtypen, die variierende Federdurchmesser haben, beispielsweise konische oder tonnenförmige Schraubenfedern. Um die hierfür erforderliche Flexibilität der Federwindemaschine sicherzustellen, ist bei herkömmlichen hochflexiblen Federwindemaschinen der Abschneidedorn bzw. der Dornkasten in einem senkrecht zur Dornachse z.B. vertikal verfahrbaren Dornschlitten untergebracht, der über eine translatorische Maschinenachse in unterschiedlich (vertikalen) Positionen in Bezug zur Zufuhreinrichtung eingestellt werden kann.

Bei Federwindemaschinen, bei denen die Lage und/oder die Orientierung der Einzugseinrichtung mit Hilfe einer steuerbaren Maschinenachse verstellt werden kann, ergibt sich die Möglichkeit eines wesentlich einfacheren und robusteren Aufbaus im Bereich des Abschneidedorns. Insbesondere ist es in diesem Fall nicht notwendig, dass der Abschneidedorn Bewegungsfreiheitsgrade für gesteuerte Bewegungen senkrecht zur Dornachse hat. Bei bevorzugten Ausführungsformen ist daher vorgesehen, dass der Dorn (Abschneidedorn) bzw. der den Dorn tragende Dornkasten am Maschinenkörper der Federwindemaschine fest angebracht ist, wobei der Begriff "fest" in diesem Zusammenhang bedeutet, dass keine Bewegungsfreiheitsgrade senkrecht zur Dornachse bzw. keine entsprechenden Maschinenachsen vorgesehen sind. Gemäß dieser Ausführungsform ist also kein senkrecht zur Dornachse verfahrbarer Dornschlitten mehr erforderlich bzw. vorhanden und es können die entsprechenden Komponenten des Dornschlittens und seines Antriebs entfallen.

Durch diese Konstruktion kann sich eine deutlich höhere Steifigkeit des Gesamtsystems ergeben. Es ergibt sich ein direkter, geschlossener und kompakterer Kraftfluss zwischen den beteiligten Komponenten beim Abschneiden. Der Kraftfluss verläuft hierbei lediglich über das Abschneidemesser, den Draht, den als Gegenmesser dienenden Abschneidedorn, die Einrichtungen, mit denen der Abschneidedorn im Hauptkörper aufgenommen ist, den beweglichen Elementen der Schnitteinheit und die Aufnahme des Abschneidmessers. Zudem ergibt sich eine einfachere Montagesituation für den Abschneidedorn. Weiterhin können sich als Folge von geringeren Relativbewegungen der beteiligten Komponenten aus der Schnittbelastung durch die höhere Steifigkeit auch höhere Standzeiten der Abschneidewerkzeuge ergeben. Aufgrund des einfachen Aufbaus ergeben sich auch Vorteile bei der Montage und somit geringere Herstellkosten der Federwindemaschine.

Vorteile im Betrieb ergeben sich unter Anderem dann, wenn Federn mit Wicklungen unterschiedlicher Wicklungsdurchmesser erzeugt werden. Dabei kann nämlich die Lage und/oder die Orientierung der Zufuhreinrichtung während der Umformoperation jeweils so verändert werden, dass der Abschneidedorn zu jeder Phase der Umformoperation an der Innenseite der Feder anliegt oder einen so geringen Abstand zur Innenseite des Drahtes hat, dass bei einer Schnittoperation das Gegenelement (der Abschneidedorn) den Draht gegen die Einwirkung des Schneidmessers sofort abstützen kann und ein plastisches Verformen der fertigen Feder durch den Schnittvorgang dadurch verhindert wird. Weitere vorteilhafte Ausführungsformen und Verfahrensvarianten werden im Zusammenhang mit den Zeichnungsfiguren anhand von Ausführungsbeispielen ausführlich erläutert.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele sind in den Zeichnungen dargestellt und werden im Folgenden näher erläutert.

### KURZBESCHREIBUNG DER ZEICHNUNGEN

- Fig. 1: zeigt in 1A eine schematische Gesamtansicht einer Federwickelmaschine zur Herstellung von Spiralfedern mit einigen Komponenten eines Systems zur Programmierung der Steuerung der Maschine und in 1B ein Detail nur mit elektrischen und mechanischen Komponenten;
- Fig. 2: zeigt schematisch die Arbeitsweise der Federwickelmaschine aus Fig. 1 mit einer während der Federherstellung verstellbaren Zufuhreinrichtung;
- Fig. 3: zeigt eine konventionelle Federwindemaschine in schräger Perspektive (3A) und in Vorderansicht (3B);
- Fig. 4: zeigt eine Ausführungsform einer Federwindemaschine mit verschwenkbarer Zufuhreinrichtung und verfahrbarem Dorn;
- Fig. 5: zeigt eine Ausführungsform einer Federwindemaschine mit verschwenkbarer Zufuhreinrichtung und maschinenfestem Dorn;
- Fig. 6: zeigt eine Ausführungsform einer Federwindemaschine mit vertikal verfahrbarer Zufuhreinrichtung und maschinenfestem Dorn;
- Fig. 7: zeigt eine weitere Ausführungsform einer Federwindemaschine mit vertikal verfahrbarer Zufuhreinrichtung und maschinenfestem Dorn; und
- Fig. 8 und 9: zeigen schematisch Arbeitsbewegungen von Maschinenachsen bei der Herstellung von Federn unterschiedlicher oder variierender Durchmesser für rechtsgängige Federn (8A bis 8D) und linksgängige Federn (9A bis 9D).

### DETAILLIERTE BESCHREIBUNG BEVORZUGTER AUSFÜHRUNGSFORMEN

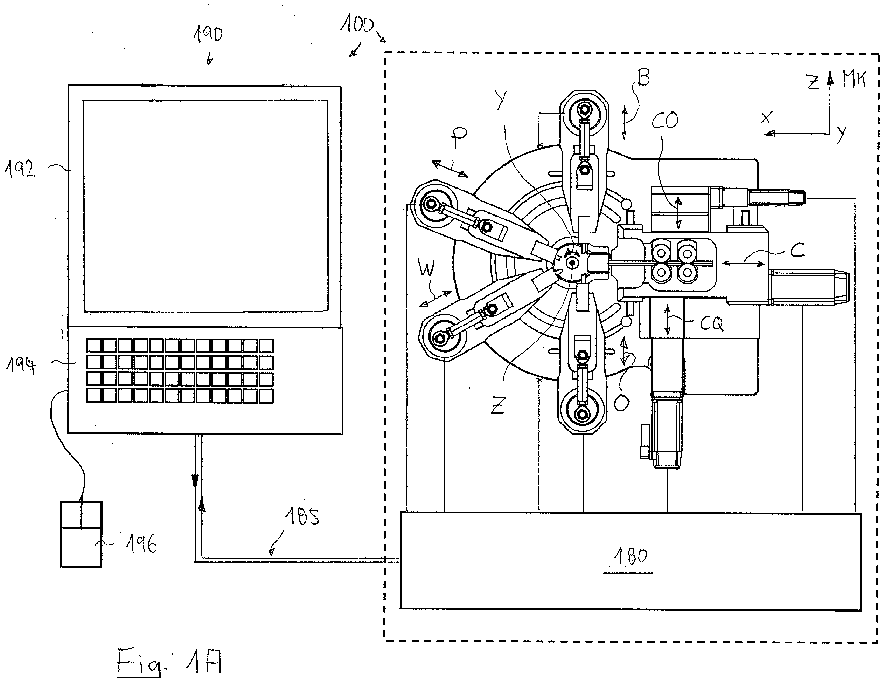

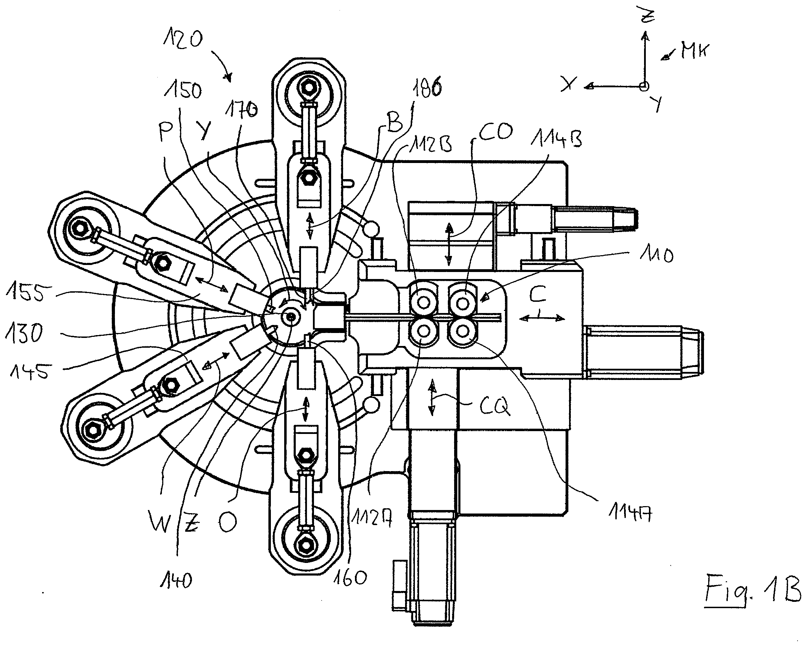

Die schematische Übersichtsdarstellung in Fig. 1A zeigt im rechten Teil einige mechanische und elektromechanische Komponenten einer Federwickelmaschine 100, die zur Herstellung von Spiralfedern aus drahtförmigem, flachdrahtförmigem bzw. bandförmigem Halbzeug eingerichtet ist und dementsprechend auch als Spiralfedermaschine 100 bezeichnet wird. Figur 1B zeigt diese Komponenten aus Gründen der Übersichtlichkeit nochmals im Detail. Die computernumerisch gesteuerte Federwickelmaschine hat mehrere steuerbare Maschinenachsen, ein Antriebssystem mit mehreren elektrischen Antrieben zum Antreiben der Maschinenachsen und eine Steuereinrichtung 180 zur koordinierten Ansteuerung von Arbeitsbewegungen der Maschinenachsen.

Der Fertigungsprozess für eine Spiralfeder bestimmter Geometrie und Federeigenschaften wird dabei über ein für den Fertigungsprozess spezifisches, computerlesbares Steuerprogramm gesteuert, in welchem die zur Herstellung des Formteils vorgesehenen Arbeitsbewegungen der Maschinenachsen und deren Abfolge in Form von NC-Sätzen und/oder in Form von Weg/Zeit-Tabellen bzw. entsprechenden Datensätzen hinterlegt sind.

Das System zur Programmierung der Federwickelmaschine bzw. der Bewegungen der Maschinenachsen hat eine im linken Figurteil von Fig. 1A schematisch gezeigte Bedieneinheit 190, die als Schnittstelle zum Maschinenbediener dient. Die Bedieneinheit hat eine Anzeigeeinheit 192 in Form eines grafikfähigen Bildschirms, der von einer nicht dargestellten Rechnereinheit angesteuert wird. An die Rechnereinheit können ein oder mehrere Eingabeeinheiten angeschlossen sein, beispielsweise eine Tastatur 194 und eine Maus 196. Wenn die Anzeigeinrichtung als Touchscreen ausgestaltet ist, können einige oder alle gesonderten Eingabeeinheiten auch entfallen.

Die Bedieneinheit 190 ist mit der Steuereinrichtung 180 über einen bidirektionalen Datenleitungspfad 185 verbunden, so dass Informationen von der Rechnereinheit der Bedieneinheit zur Steuereinrichtung übertragen werden können und Informationen aus der Steuereinrichtung, gegebenenfalls nach Bearbeitung, an der Anzeigeeinheit 192 angezeigt werden können.

Die Federwickelmaschine hat eine Zufuhreinrichtung 110 mit zwei Paaren von übereinander angeordneten Zufuhrrollen bzw. Einzugsrollen 112A, 112B bzw. 114A, 114B, durch deren paarweise gegenläufige Drehbewegung aufeinanderfolgende Abschnitte eines (von einem nicht gezeigten) Materialvorrat kommenden und durch eine ebenfalls nicht gezeigte Richteinheit geführten Drahts, Flachdrahts bzw. Bandes mit numerisch gesteuertem Vorschubgeschwindigkeitsprofil in den Bereich einer Umformeinrichtung 120 zugeführt werden. Der Flachdraht bzw. das Band ist ein drahtförmiges Material mit einer im Vergleich zu seiner Dicke relativ großen Breite. Dieses Material wird im Folgenden allgemein als "Draht" bezeichnet. Die Zufuhreinrichtung wird gelegentlich auch als Einzugseinrichtung bezeichnet, entsprechend werden auch die Begriffe "Einzugsrolle" und "Zufuhrrolle" synonym verwendet. Eine mit Rollen ausgestattete Zufuhrreinrichtung oder Einzugseinrichtung kann ein Paar oder mehrere Paare von Rollen (Einzugsrollen bzw. Zufuhrrollen) haben.

Bei dem Ausführungsbeispiel hat die Federwickelmaschine ein mit Kleinbuchstaben x, y und z gekennzeichnetes, rechtwinkliges Maschinenkoordinatensystem MK mit einer vertikalen z-Achse und horizontalen x- und y-Achsen. Im Beispiel verläuft die x-Achse parallel zu der durch die Zufuhreinrichtung 110 definierten Zufuhrrichtung oder Zufuhrrichtung des noch ungebogenen Drahtes. Von den maschinenfesten Koordinatenachsen sind die nachfolgend noch erläuterten, geregelt angetriebenen Maschinenachsen zu unterscheiden, die jeweils mit Großbuchstaben bezeichnet werden. Beispielsweise ist die C-Achse für den Vorschub bzw. die Zufuhr des noch ungebogenen Drahtes in Richtung Umformeinrichtung 120 zuständig.

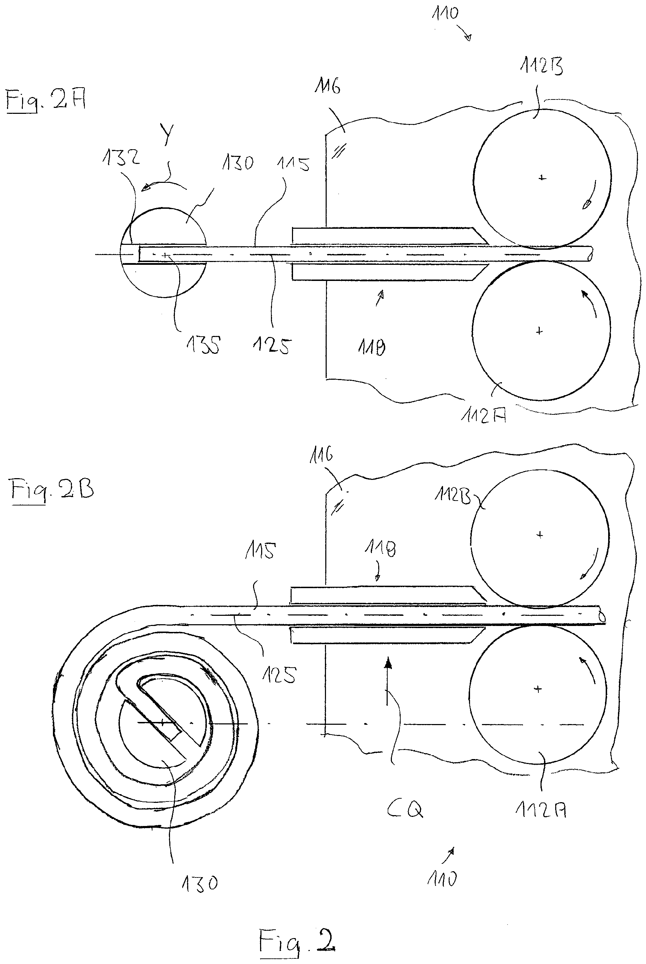

Der in den Arbeitsbereich der Umformeinrichtung 120 zugeführte Draht wird mit Hilfe von numerisch gesteuerten Werkzeugen der Umformeinrichtung zu einer ebenen Spiralfeder umgeformt. Bei der gezeigten Konfiguration sind folgende Werkzeuge und entsprechende Maschinenachsen vorgesehen:
Ein in Fig. 2 besonders deutlich dargestellter Wickeldorn 130 ist um eine horizontale, parallel zur y-Achse verlaufende Drehachse 135 drehbar und axial zu dieser Achse verschiebbar. Die für die Drehung des Wickeldorns zuständige Maschinenachse ist die Y-Achse, die axiale Verschiebung des Wickeldorns wird über die Z-Achse erreicht. Der Wickeldorn hat einen Querschlitz 132, in den ein Anfangsabschnitt des zugeführten Drahtes 115 vor dem Wickeln einer Spiralfeder eingeführt und durch Drehung des Wickeldorns geklemmt und dadurch bei der weiteren Drehung gehalten wird.

Ein Einfädelwerkzeug 140 mit einer keilförmigen Spitze wird zur Unterstützung des Einfädelns des Drahtanfangs in den Schlitz des Wickeldorns mit Hilfe eines ersten Schiebers 145 in den Bereich unmittelbar vor dem Wickeldorn geschoben. Die zugehörige, im Wesentlichen radial zur Y-Achse verlaufende translatorische Achse ist die W-Achse.

Ein Fixierwerkzeug 150 mit einer konkavzylindrischen Andrückkontur wird mit Hilfe eines zweiten Schiebers 155 in Richtung der um den Wickeldorn gewickelten Feder verschoben. Das Fixierwerkzeug dient in der Endphase des Wickelvorgangs dazu, die gewickelte Spiralfeder zusammenzudrücken bzw. zu fixieren, damit diese nicht aufspringt, wenn die Feder vom zugeführten Draht abgetrennt wird. Die im Wesentlichen radial zur Drehachse des Wickeldorns verlaufende translatorische Maschinenachse ist die P-Achse.

Am äußeren Ende der zur erzeugenden Spiralfeder ist im Beispielsfall ein mehrfach gebogener Abschlussabschnitt vorgesehen, der mit Hilfe zweier weiterer Maschinenachsen erzeugt wird. Ein erstes Biegewerkzeug 160 dient dabei als Matrize und wird vertikal von unten etwa radial zur Drehachse des Wickeldorns Richtung Draht vorgeschoben. Die zugehörige translatorische Achse ist die O-Achse.

Von der gegenüberliegenden Seite wird gleichzeitig ein als Patrize gestaltetes zweites Biegewerkzeug 170 mit Hilfe einer weiteren translatorischen Achse (B-Achse) zur Formung des gebogenen Endabschnitts nach unten verschoben. Die B-Achse bewegt gleichzeitig ein neben dem zweiten Biegewerkzeug eingespanntes Schneidwerkzeug 186, das zum Abtrennen der Spiralfeder vom zugeführten Draht dient.

Die Walzen jedes Einzugwalzenpaares können wahlweise aufeinander zugestellt oder voneinander wegbewegt werden. Sind die Walzen auf minimalen Abstand aufeinander zugestellt, so greifen sie kraftschlüssig am dazwischen liegenden Drahtabschnitt an und dieser wird durch Drehung der Einzugswalzen in Richtung der Umformwerkzeuge gefördert. Ist der Drahtanfang in den Schlitz des Wickeldorns eingeführt und dieser so weit gedreht, dass er den Drahtanfang sicher einklemmt, können die Einzugswalzenpaare geöffnet werden, so dass der weitere Drahtvorschub dadurch erreicht wird, dass der sich drehende Wickeldorn den Draht in Richtung Wickeldorn zieht. Die Achse für die Walzenanpressung wird als CO-Achse bezeichnet und bewirkt eine lineare Bewegung der oberen Einzugswalzen 112B, 114B senkrecht zur Drahtzufuhrrichtung bzw. parallel zur z-Richtung.

Bei der gezeigten Ausführungsform ist die gesamte Zufuhreinrichtung außerdem vertikal, d.h. parallel zur z-Richtung bzw. senkrecht zur Zufuhrrichtung des Drahts gesteuert verfahrbar. Die zugehörige translatorische Maschinenachse ist die CQ-Achse. Eine Nutzungsmöglichkeit wird im Zusammenhang mit Fig. 2 erläutert.

Der Bewegungsablauf der Maschinenachsen während eines Bewegungszyklus zur Fertigung einer Spiralfeder kann bei dieser Konfiguration beispielsweise wie folgt gesteuert werden.

Zunächst wird mit Hilfe der in ihrer Eingriffsstellung befindlichen und paarweise gegenläufig drehenden Einzugwalzen (C-Achse) der Draht in Richtung Wickeldorn gefördert, bis ein Drahtanfangabschnitt in den Querschlitz des Wickeldorns gleitet. Diese Einfädelbewegung kann durch das Einfädelwerkzeug 140 unterstützt werden. Wenn dessen Achse (W-Achse) programmiert ist, kann durch den Antrieb der W-Achse das Einfädelwerkzeug in der Phase vor Einfahren des Drahtanfangs in den Schlitz so nahe zum Wickeldorn gefahren werden, dass ein Ausweichen des herangeführten Drahtanfangs mechanisch verhindert wird, so dass dieser in jedem Fall in den Querschlitz am Wickeldorn einfährt. Bei anderen Prozessen kann diese Einführhilfe auch wegfallen.

Sobald der sich drehende Wickeldorn den Draht sicher ergriffen hat, können die oberen Einzugswalzen 112B, 114B gleichzeitig mittels der CO-Achse abgehoben werden, so dass der weitere Drahtvorschub allein vom drehenden Wickeldorn erzeugt wird. Es ist auch möglich, die Einzugswalzen in Eingriff mit dem Draht zu belassen und sie entsprechend dem gewünschten Vorschubprofil weiterzudrehen.

Ist der Aufwickelprozess nach einer vorgegebenen Anzahl von Drehungen des Wickeldorns abgeschlossen, wird der Wickeldorn zur Entspannung des Drahtmaterials etwas zurückgedreht. Außerdem wird durch eine Vorschubbewegung der P-Achse das Fixierwerkzeug 150 an den Außenumfang der Feder angelegt und sichert diese gegen Aufspringen bei den nachfolgenden Arbeitsschritten.

In der Endphase des Bewegungszyklus fahren die beiden komplementär geformten Biegewerkzeuge 160, 170 mit Hilfe der O-Achse und der B-Achse gleichzeitig gegenläufig aufeinander zu. Dabei wird zunächst durch einen Schnitt mittels des Schnittwerkzeugs 180 die fertig gewickelte Spiralfeder vom Draht abgetrennt. Unmittelbar danach bzw. zeitlich überlappend gestalten die Biegewerkzeuge 160, 170 in einem Umformvorgang den komplex gebogenen Endabschnitt der Spiralfeder. Danach wird der Wickeldorn mittels der Z-Achse zurückgezogen, wodurch die fertige Feder abgestreift wird.

Danach kann ein identischer nächster Bewegungszyklus beginnen, mit dem dann die nächste Spiralfeder erzeugt wird.

Anhand von Fig. 2 wird eine Nutzungsmöglichkeit der verstellbaren Zufuhreinrichtung 110 erläutert, welche mit Hilfe der geregelten, translatorischen CQ-Achse senkrecht zur Einzugsrichtung bzw. Zufuhrrichtung gesteuert linear verfahrbar ist. Die Fig. 2A und 2B zeigen jeweils rechts die austrittsseitigen Einzugsrollen 112A, 112B der Zufuhreinrichtung 110. Diese sind an einen mit Hilfe der CQ-Achse vertikal verfahrbaren Träger 116 gelagert. In Förderrichtung hinter den Einzugsrollen ist am Träger 116 noch eine Führungseinrichtung 118 mit zwei parallelen Führungsschienen angebracht, die den geförderten Draht beim Vorschub in Richtung der Umformeinrichtung 120 geradlinig führen.

Links ist jeweils der mit einem Querschlitz 132 versehene Wickeldorn 130 gezeigt, der mit Hilfe der Y-Achse um die Drehachse 135 des Wickeldorns in einer vorgebbaren Drehrichtung gedreht werden kann und zusätzlich mit Hilfe der Z-Achse parallel zur Drehachse 135 verschoben werden kann, um beispielsweise durch Rückzug des Wickeldorns die fertige Feder abzustreifen.

Fig. 2A zeigt die Zufuhreinrichtung 110 in einer Grundstellung, bei der die durch die vertikale Position der Einzugsrollen und der Führungsschienen definierte Zufuhrrichtung 125 exakt radial zur Drehachse 135 des Wickeldorns verläuft. Diese Grundstellung wird beispielsweise für das Einfädeln des vorderen Drahtendes in den Querschlitz 132 angefahren, wozu der Wickeldorn so gedreht wird, dass der Querschlitz 132 im Wesentlichen parallel zur Zufuhrrichtung (bzw. parallel zur x-Achse des Maschinenkoordinatensystems MK) verläuft.

Wenn nach Abschluss des Einfädelns durch Drehung des Wickeldorns die Erzeugung von Windungen der Spiralfeder beginnt, ändert sich allmählich mit fortschreitender Drahtzufuhr und zunehmender Windungszahl der Außendurchmesser der Spiralfeder. Würde in diesem Fall die Zufuhreinrichtung 110 in ihrer Grundstellung verbleiben, so würde der Draht nach Austritt aus der Führungseinrichtung 118 mit zunehmendem Durchmesser der Spiralfeder immer stärker auf Biegung beansprucht, bevor er sich an den Außenbereich der vorhergehenden Wicklung anlegt.

Um eine plastische Deformation des Drahts in diesem Bereich zu vermeiden, wäre es möglich, den Abstand zwischen der Zufuhreinrichtung bzw. den Führungsschienen und dem Wickeldorn im Verhältnis zum maximalen Durchmesser der Spiralfeder so groß zu halten, dass bei allen Durchmessern nur eine leichte elastische Verbiegung des Drahts ohne plastische Verformung eintritt.

Mit Hilfe des während der Entstehung der Spiralfeder verschiebbaren Einzugs kann erreicht werden, dass der Draht zwischen Austritt aus der Führungseinrichtung 118 und dem Anlegen an die Außenseite der sich entwickelnden Spiralfeder praktisch nicht verbogen wird. Bei dem Ausführungsbeispiel ist die Vorschubbewegung der CQ-Achse während des Wickelns der Spiralfeder so programmiert, dass die durch die Zufuhreinrichtung 110 definierte Zufuhrrichtung 125 des Drahts in jeder Phase des Aufwickelns im Wesentlichen tangential zum Außenumfang der sich entwickelnden Spiralfeder verläuft. Wie in Fig. 2B erkennbar, wird dadurch der Draht zwischen Austritt aus der Führungseinrichtung 118 und dem Aufwickeln am Umfang der Spiralfeder praktisch nicht verbogen, so dass plastische Deformation in diesem Bereich zuverlässig vermieden wird.

Ein Vorteil dieser Ausgestaltung liegt darin, dass Federn mit hoher Qualität erzeugt werden können. Ein anderer Vorteil besteht darin, dass ein sehr platzsparender kompakter Aufbau möglich ist, da der Austritt des Zufuhrystems (hier Austritt aus den Führungsschienen 118) sehr nahe an den Bereich des Wickeldorn herangebracht werden kann.

Bei anderen, nicht bildlich dargestellten Ausführungsformen ist die Zufuhreinrichtung als Ganzes um eine parallel zur Drehachse 135 des Wickeldorns 130 verlaufende Schwenkachse mittels einer entsprechenden Maschinenachse gesteuert verschwenkbar. Auch dadurch kann erreicht werden, dass der zugeführte Draht jeweils im Wesentlichen tangential zu der im Durchmesser immer größer werdenden Windung der Spiralfeder geführt wird.

Die Spiralfedermaschine ist ein Beispiel für eine Federmaschine mit einer Zufuhreinrichtung zum Einziehen eines langgestreckten Werkstücks (hier eines Drahts) in den Bereich der Umformeinrichtung, wobei die Lage und/oder Orientierung der Zufuhreinrichtung eine Zufuhrrichtung definiert und die Zufuhreinrichtung mit Hilfe einer gesteuerten Maschinenachse (hier CQ-Achse) verstellbar ist. Der über die Steuereinrichtung mit Hilfe einer Maschinenachse verstellbare Einzug kann beim Einrichten der Maschine für einen Umformprozess genutzt werden, um die Zufuhrrichtung günstig in Bezug auf die Werkzeuge der Umformeinrichtung auszurichten. Besondere Vorteile ergeben sich dadurch, dass die Maschine so gesteuert werden kann, dass der Einzug während der Erzeugung der Feder verstellt wird, beispielsweise um die Zufuhreinrichtung an einen während der Federerzeugung sich ändernden Windungsdurchmesser anzupassen. Die Anpassung kann insbesondere so erfolgen, dass die Zufuhrrichtung immer im Wesentlichen tangential zu der gerade entstehenden Wicklung verläuft.

Anhand von Fig. 2 wurden einige Vorteile am Beispiel der Erzeugung einer ebenen Spiralfeder erläutert. Ein verstellbarer Einzug kann jedoch auch bei anderen Federmaschinen vorgesehen sein, beispielsweise bei einer Federmaschine zur Erzeugung von Schraubenfedern durch Federwinden, also bei einer Federwindemaschine. Hier kann eine verstellbare Zufuhreinrichtung z.B. dann genutzt werden, wenn Schraubenfedern mit einem längs der Axialrichtung der Feder variierendem Wicklungsdurchmesser erzeugt werden sollen, beispielsweise konische Schraubenfedern oder tonnenförmige Schraubenfedern. Auch hier kann die durch die Zufuhreinrichtung definierte Zufuhrrichtung durch Verschieben der Zufuhrrichtung z.B. in einer senkrecht zur Zufuhrrichtung verlaufenden Verschiebungsrichtung oder Verschwenken der Zufuhreinrichtung um eine parallel zur Federachse verlaufende Schwenkachse allmählich so verändert werden, dass die Zufuhrrichtung immer im Wesentlichen tangential zu der gerade entstehenden Wicklung verläuft, auch wenn sich der Wicklungsdurchmesser während der Herstellung der Feder ändert.

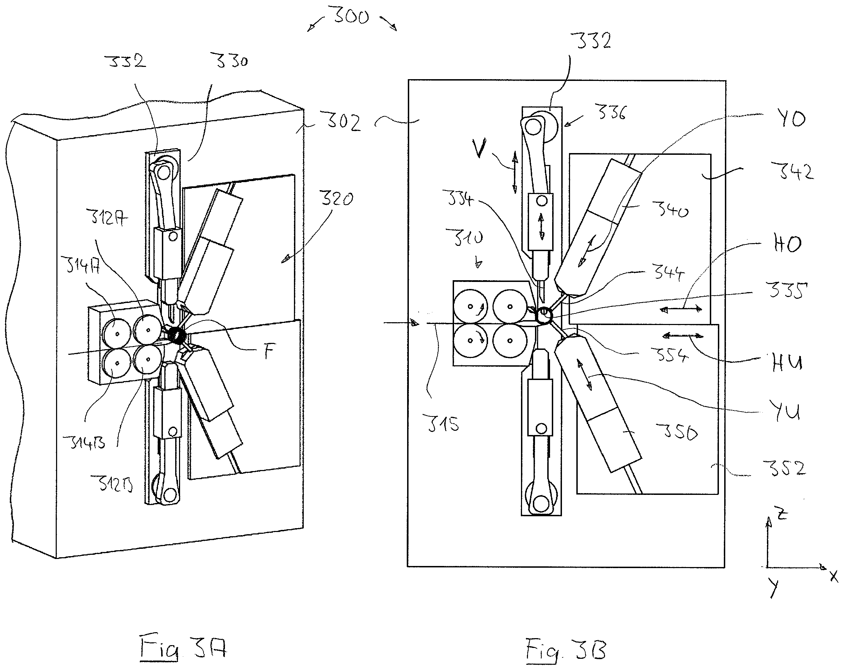

Im Folgenden werden verschiedene Varianten von Federwindemaschinen erläutert, die mit einer während der Federherstellung programmgesteuert verstellbaren Einzugsseinrichtung ausgestattet sind. Zur Erleichterung des Verständnisses wichtiger Unterschiede zu herkömmlichen Federwindemaschinen wird zunächst anhand von Fig. 3 der Aufbau einer konventionellen Federwindemaschine 300 erläutert, die sich durch hohe Flexibilität auszeichnet und die Herstellung von linksgängigen und rechtsgängigen Schraubendruckfedern mit vielen unterschiedlichen Federgeometrien ermöglicht. Zur Veranschaulichung ist die gleiche Maschine in Fig. 3A perspektivisch und in Fig. 3B in der Vorderansicht gezeigt, die später auch für die Ausführungsbeispiele genutzt wird.

Die Federwindemaschine hat einen Hauptkörper mit einer senkrechten Maschinenwand 302, an der viele Komponenten der Federwindemaschine montiert sind. Eine Zufuhreinrichtung 310 hat ein oder mehrere, im Beispielsfall zwei Paare von übereinanderliegenden, paarweise gegenläufig antreibbaren Zuführrollen 312A, 312B, 314A, 314B, die aufeinanderfolgende Drahtabschnitte eines von einem Drahtvorrat kommenden und durch eine nicht gezeigte Richteinheit geführten Drahtes 315 mit numerisch gesteuertem Zufuhrgeschwindigkeitsprofil in den Bereich einer Umformeinrichtung 320 zuführt. Der Draht wird mit Hilfe von numerisch gesteuerten Werkzeugen der Umformeinrichtung während einer Umformoperation (Federwindeoperation) zu einer Schraubenfeder F kalt umgeformt. Die an der Maschinenwand fest installierte Zufuhreinrichtung 310 weist Drahtführungen auf, um ein Auslenken des Drahtes durch den Windeprozess zu verhindern.

In der Maschinenwand 302 ist ein sogenannter Dornschlitten 332 angebracht, der ein zentrales Element einer Schneideinheit 330 darstellt, deren Aufgabe es ist, eine fertig gestellte Feder mit Hilfe eines Schneidwerkzeugs 334 vom zugeführten Draht abzutrennen. Der Dornschlitten 332 trägt an seiner Vorderseite einen horizontal abstehenden Dorn 335, der gelegentlich auch als Abschneiddorn bezeichnet wird und der als Scherkante bzw. als Gegenelement für das Schneidwerkzeug während des Schnittvorgangs dient. Der Dorn ist an einem nicht näher dargestellten Dornkasten angebracht bzw. wird von dem Dornkasten aufgenommen. Der Dornkasten wird im Dornschlitten 332 in einem formschlüssigen, im Regelfall rechteckig ausgeführten, Durchbruch aufgenommen. Der Dornkasten kann innerhalb des Durchbruchs in axialer Richtung, parallel zur Federlängsachse bzw. zur y-Achse des Maschinenkoordinatensystems, verschoben werden. Die axiale Verschiebemöglichkeit kann im Herstellungsprozess für die axiale Verschiebung des Abschneiddorns genutzt werden. Dies wird auch als "axiale Dornverschiebung" bezeichnet und wird optional mit einem Servomotor angetrieben.

Die Schneideinheit ist mit Hilfe eines am Dornschlitten angebrachten Kurbeltriebs 336 in vertikaler Richtung (parallel zur z-Richtung des Maschinenkoordinatensystems) so bewegbar, dass der Draht beim Schneiden zwischen dem Dorn 335 und dem Schneidwerkzeug 334 abgetrennt wird. Bei der Herstellung von rechtsgängigen Federn ist das Schneidwerkzeug wie dargestellt an einer oberen Schneideinheit 330 angebracht, bei linksgängigen Federn wird eine unterhalb des Dorns angebrachte untere Schneideinheit verwendet.

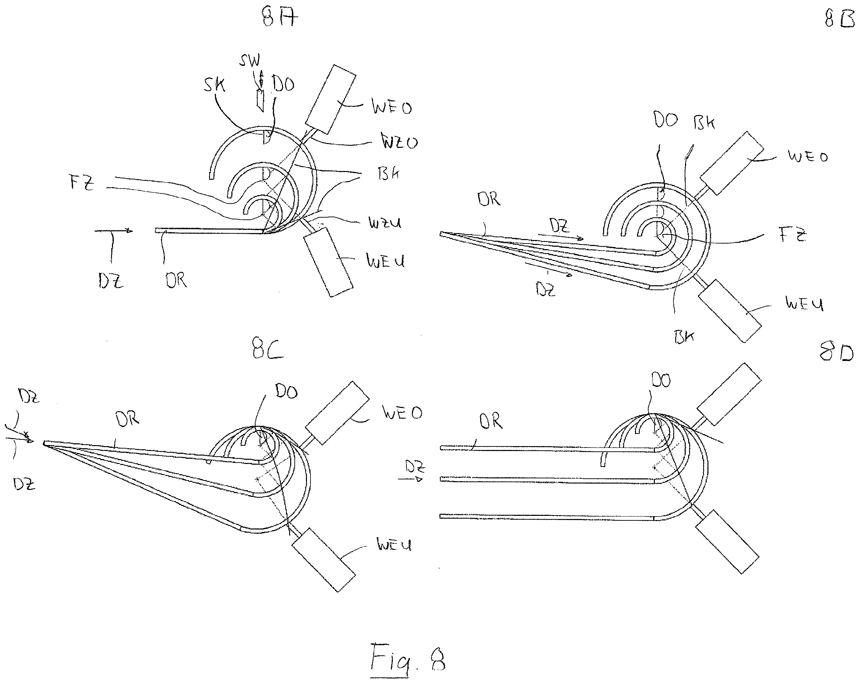

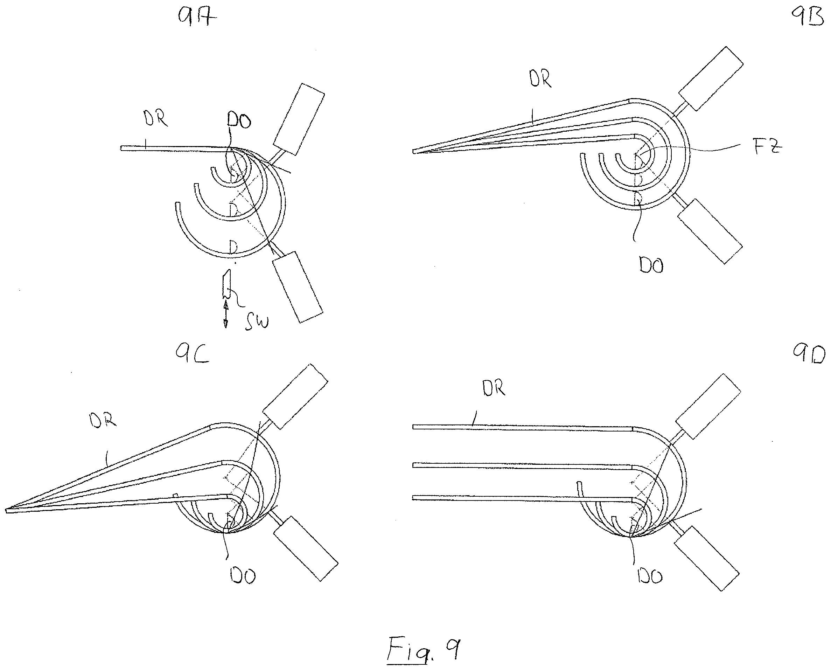

Der Dornschlitten 332 ist als Ganzes in vertikaler Richtung mit Hilfe einer translatorischen Maschinenachse (V-Achse) verschiebbar. Um unterschiedliche Federdurchmesser herstellen zu können und um von linksgängigen auf rechtsgängige Federn umstellen zu können, wird der gesamte Dornschlitten 332 zusammen mit den daran angebrachten Schnitteinrichtungen und dem Dorn 335 in vertikaler Richtung verfahren, damit die jeweils richtigen Dornpositionen angefahren werden können (vgl. Fig. 8A, 9A)

Zur Herstellung von Federwindungen sind bei der gezeigten Variante zwei Windewerkzeuge vorgesehen, nämlich ein oberer Windestift 344 und ein unterer Windestift 354. Die Begriffe "Windewerkzeug" und "Windestift" werden hier synonym verwendet. Der obere Windestift 344 wird von einer oberen Windeeinheit 340 gehalten, die auf einer oberen Windeplatte 342 montiert ist, welche über eine translatorische Maschinenachse (HO-Achse) horizontal bzw. parallel zur Drahtzuführrichtung (x-Richtung des Maschinenkoordinatensystems) verschiebbar ist. Die obere Windeeinheit ist auf der oberen Windeplatte mit einem Winkel von 65° zur Horizontalen über eine gesteuerte Maschinenachse (YO-Achse) linear verschiebbar. Der untere Windestift 354 wird von einer unteren Windeeinheit 350 gehalten, die auf einer unteren Windeplatte 352 montiert ist, welche über eine translatorische Maschinenachse (HU-Achse) horizontal verschiebbar ist. Die untere Windeeinheit kann den unteren Windestift mittels einer translatorischen Maschinenachse (YU-Achse) in einer Verfahrrichtung 65° zur Horizontalen linear verfahren. Die Windeeinheiten sind im Beispielsfall über eigene Kurventriebe unabhängig voneinander entlang ihrer linearen Verfahrachsen verfahrbar. Die Windestifte sind jeweils um 20° gegenüber der Verfahrrichtung der zugeordneten Windeeinheiten angestellt, so dass sie im 45°-Winkel zur Horizontalen bzw. zur Drahtzufuhrrichtung an der Feder angreifen. Es gibt auch Federwindemaschinen mit nur einem einzigen Windestift, der dann im Wesentlichen horizontal, d.h. parallel zur Zuführrichtung angreift.

Bei anderen Varianten können die Orientierungen der Verfahrachsen, z.B. der YO-Achse und der YU-Achse und/oder der Windewerkzeuge in Bezug auf die sie aufnehmenden Teile der Windeeinheiten von den genannten Werten abweichen.

Durch entsprechendes Ansteuern der einzelnen Antriebe der Maschinenachsen können mit diesem Maschinenaufbau Federn F mit sehr unterschiedlichen Geometrien hergestellt werden, insbesondere zylindrische Schraubenfedern, konische Federn, doppelkonische Federn, Federn mit Eindrehungen an den Enden, Federn mit unterschiedlichen Steigungsverläufen, Federn mit gekrümmten Federachsen, Federn mit tangential abstehenden Federenden etc.

Zur Umstellung der Maschine von Rechtswinden auf Linkswinden wird der Dornschlitten vertikal verfahren. Sofern eine mechanische Kopplung zwischen den Windeplatten vorhanden ist, wird diese gedreht. Sofern an der unteren Schneideinheit noch kein Schneidwerkzeug ist, wird ein solches angebracht.

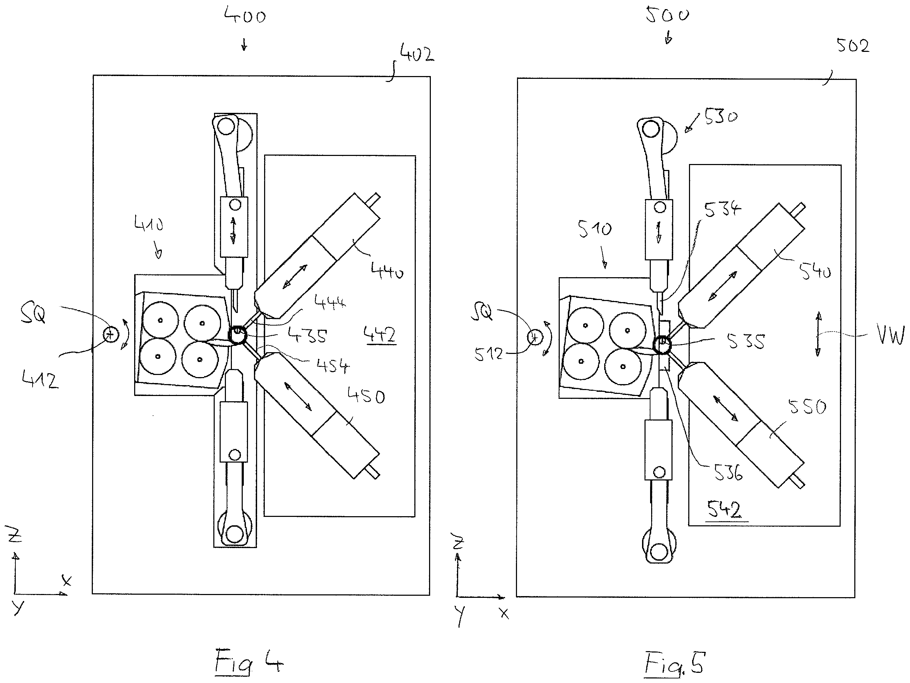

In Fig. 4 ist schematisch eine Federwindemaschine 400 gemäß einer Ausführungsform der Erfindung dargestellt. Gleiche oder funktional ähnliche oder entsprechende Komponenten und Baugruppen wie in Fig. 3 tragen die gleichen Bezugszeichen wie bei der Federwindemaschine von Fig. 3, erhöht um 100. Die Federwindemaschine 400 zeichnet sich gegenüber dem Stand der Technik (Fig. 3) u.a. durch eine einfachere Konstruktion im Bereich der Windeeinheiten aus. Die volle Flexibilität zur Herstellung unterschiedlicher Federgeometrien bleibt erhalten.

Eine Besonderheit dieser Ausführungsform besteht darin, dass die Zufuhreinrichtung 410 relativ zur Maschinenwand 402 um eine parallel zur Dornachse des Dorns 435 verlaufende Schwenkachse 412 verschwenkbar ist. Die Schwenkachse verläuft in y-Richtung des Maschinenkoordinatensystems. Das die Rollen tragende Bauteil der Zufuhreinrichtung sitzt hierzu in einer Aussparung der Maschinenwand. Der Mechanismus zum Ausführen der Schwenkbewegung ist nicht im Einzelnen dargestellt. Die Schwenkbewegung kann beispielsweise über einen Exzenter, über Zylinder, über eine Spindel oder ähnliches realisiert werden. Eine entsprechende Maschinenachse (SQ-Achse) für die Schwenkbewegung ist an die Steuereinrichtung angeschlossen, so dass die Schwenkbewegung unter der Kontrolle des NC-Steuerprogramms auch während einer Umformoperation zur Herstellung einer Schraubenfeder durchgeführt werden kann. Eine weitere Änderung gegenüber der herkömmlichen Federwindemaschine aus Fig. 3 besteht darin, dass die obere Windeeinheit 440 und die untere Windeeinheit 450 gemeinsam auf einer ortsfesten, d.h. nicht beweglich gelagerten Windeplatte 442 montiert sind. Die entsprechenden Maschinenachsen (HO-Achse und HU-Achse in Fig. 3B) können somit eingespart werden. Die linearen Verfahrachsen der beiden Windeeinheiten laufen z.B. unter 45° zur Horizontalen, so dass die zugeordneten Windewerkzeuge 444 (oberes Windewerkzeug) bzw. 454 (unteres Windewerkzeug) jeweils mit der Verfahrrichtung der zugeordneten Windeeinheit fluchten.

Bei dieser Anordnung ist als einziger Freiheitsgrad für die Bewegung der Windeeinheiten nur noch die lineare Verfahrbewegung entlang ihrer z.B. um 45° zur Horizontalen angestellten Verfahrrichtungen erforderlich. Die Konstruktion auf Seiten der Windeeinheiten ist dadurch weniger komplex als im Stand der Technik und kann stabiler ausgeführt sein. Auf weitere Freiheitsgrade der Bewegung der Windeeinheiten kann verzichtet werden, da die Federachse bzw. die Federmitte FZ bei rechtsgängigen und bei linksgängigen Federn die gleiche feste Position einnehmen kann und sich die Windeeinheiten dadurch immer auf derselben Bahnkurve BK bewegen können, egal welcher Federdurchmesser oder welche Wickelrichtung hergestellt werden muss (vgl. Fig. 8B, 9B).

Die Federwindemaschine 500 gemäß der Ausführungsform von Fig. 5 hat, genau wie die Ausführungsform von Fig. 4, eine verschwenkbare Einzugsrichtung 510, die um eine horizontale Schwenkachse 512 mit Hilfe einer geeigneten Maschinenachse (SQ-Achse) verschwenkbar ist, wobei die Schwenkachse 512 parallel zur Dornachse des Dorns 535 ausgerichtet ist. In dieser Variante ist der Dorn 535 bzw. der den Dorn tragende Dornkasten 536 jedoch ortsfest an der Maschinenwand 502 montiert, da eine Dornverschiebung in Vertikalrichtung (beim Umrüsten von linksgängige auf rechtsgängige Feder und/oder beim Winden von Federn mit variierendem Durchmesser während der Federwindeoperation) entfallen kann. Dementsprechend gibt es auch keinen linear verschiebbaren Dornschlitten und die Antriebskomponenten der zugehörigen Maschinenachse (V-Achse in Fig. 3) können eingespart werden.

Ähnlich wie bei der Ausführungsform von Fig. 4 sind die beiden Windeeinheiten (obere Windeeinheit 540, untere Windeeinheit 550) auf einer gemeinsamen Windeplatte 542 montiert und können im Beispielsfall in 45° zur Horizontalrichtung über die zugeordneten Maschinenachsen linear verfahren werden. Die Windeplatte als Ganzes ist an der Maschinenwand über geeignete Führungen vertikal verschiebbar gelagert und kann mit Hilfe einer translatorischen Maschinenachse (VW-Achse) in Vertikalrichtung verschoben werden.

Bei dieser Konstruktion wird die Federherstellung so gesteuert, dass die aktuelle Federwindung (d.h. diejenige Federwindung, die gerade in Kontakt mit den Windestiften steht und dadurch durch Umformen erzeugt wird) immer direkt am Dorn 535 entlangläuft, so dass sich der Draht bzw. die Feder jederzeit in einer Schnittposition befindet, in der ein Abtrennen mittels des Schneidwerkzeugs 534 der zugehörigen Schneideinheit 530 möglich wäre. Eine günstige Schnittposition des Dorns zeichnet sich dadurch aus, dass der Dorn entweder leicht in Berührungskontakt mit der Innenseite des Drahts steht (tangentiale Anlage des Abschneiddorns an der Innenseite der Feder) oder nur einen kleiner Spalt bzw. ein sehr kleinen Abstand von diesem aufweist. Der endliche Abstand zwischen Draht und Dorn kann z.B. in der Größenordnung des Drahtdurchmessers oder darunter liegen. Dadurch werden plastische Verformungen des Drahts durch den Schnittvorgang vermieden.

Über die Schwenkbewegung der Zufuhreinrichtung 510 kann die Feder F entsprechend zum Dorn 535 positioniert werden. Die unterschiedlichen Stellungen für unterschiedliche Durchmesser sowie für rechts- und linksgängige Federn können den Fig. 8 und 9 und der zugehörigen Beschreibung entnommen werden.

Die Ausführungsformen der Fig. 4 und 5 zeigen beispielhaft, dass bei Verwendung einer verschwenkbaren Zufuhreinrichtung lediglich eine vertikale lineare Relativverschiebung zwischen dem Dorn und den beiden Windeeinheiten ermöglicht werden muss, um die volle Flexiblität für die Herstellung von linksgängigen und rechtsgängigen Formfedern zu erhalten. Diese Möglichkeit zur Einstellung unterschiedlicher relativer Positionen zwischen dem Dorn und den Windeeinheiten wird bei der Ausführungsform der Fig. 4 durch den vertikal verschiebbaren Dornschlitten realisiert, so dass die Windeplatte 442 fest montiert sein kann. Bei der Ausführungsform von Fig. 5 sind die beiden Windeeinheiten 540, 550 dagegen durch vertikales Verfahren der sie tragenden Windeplatte 542 gemeinsam vertikal verfahrbar, während der Dorn 535 bzw. der Dornkasten keinen Bewegungsfreiheitsgrad in Vertikalrichtung benötigt und dementsprechend in dieser Richtung ortsfest montiert ist. Untersuchungen der Erfinder haben gezeigt, dass der Verzicht auf einen verfahrbaren Dornschlitten bzw. die Maßnahme, den Dorn bzw. den Dornkasten mit dem im Dornkasten eingebauten Dorn direkt in die Vorderwand (Maschinenwand) des Hauptkörpers der Federmaschine anzubauen, erhebliche Vorteile für die Konstruktion der Federwindemaschine und auch für ihre Funktion und die Qualität der damit hergestellten Federn erzielbar sind. Zum Verständnis ist zu berücksichtigen, dass bei herkömmlichen Maschinen der in Fig. 3 gezeigten Art der Hauptkörper der Federmaschine durch den Dornschlitten in eine linke und eine rechte Hälfte geteilt wird, wobei die Zufuhreinrichtung in den gezeigten Beispielsfällen an der linken Hälfte und die Windeeinheiten an der rechten Hälfte montiert sind. Hierbei sollte durch konstruktive Maßnahmen dafür Sorge getragen werden, dass die Gesamtsteifigkeit des Systems durch diese Aufteilung des Hauptkörpers in zwei Hälften nicht beeinträchtigt wird. Reicht die Gesamtsteifigkeit des Systems nicht aus, so kann dies unter Umständen am Verschleißverhalten der am Schnittvorgang beteiligten Werkzeuge sichtbar werden.

Durch die feste Anordnung des Dorns bzw. des Dornkastens kann nicht nur die konstruktive Komplexität der Federwindemaschine reduziert werden, sondern es kann auch eine deutliche Erhöhung der Gesamtsteifigkeit im Schneidsystem (Schneiddorn, Schneidmesser, Schneidschieber etc.) erreicht werden. Die Verlagerung der Abschneideebene wird durch die programmgesteuerte Verfahrmöglichkeit der Zufuhreinrichtung realisiert. Dadurch kann die Forderung einer tangentialen Anlage des Dorns an der Innenseite der Feder erfüllt und für verschiedene Federn erreicht werden. Der Verzicht auf einen verfahrbaren Dornschlitten kann unter anderem die folgenden Vorteile bieten: einfacherer Aufbau, geringere Herstellungskosten, höhere Steifigkeit des Gesamtsystems, Möglichkeit des direkten Anbaus der Abschneidewerkzeuge an den Hauptkörper der Federwindemaschine, höhere Standzeiten der Abschneidewerkzeuge, einfachere Befestigung der Abschneidewerkzeuge, keine Zerteilung des Hauptkörpers in eine linke und eine rechte Hälfte sowie einfachere Montage der verschiedenen Komponenten.

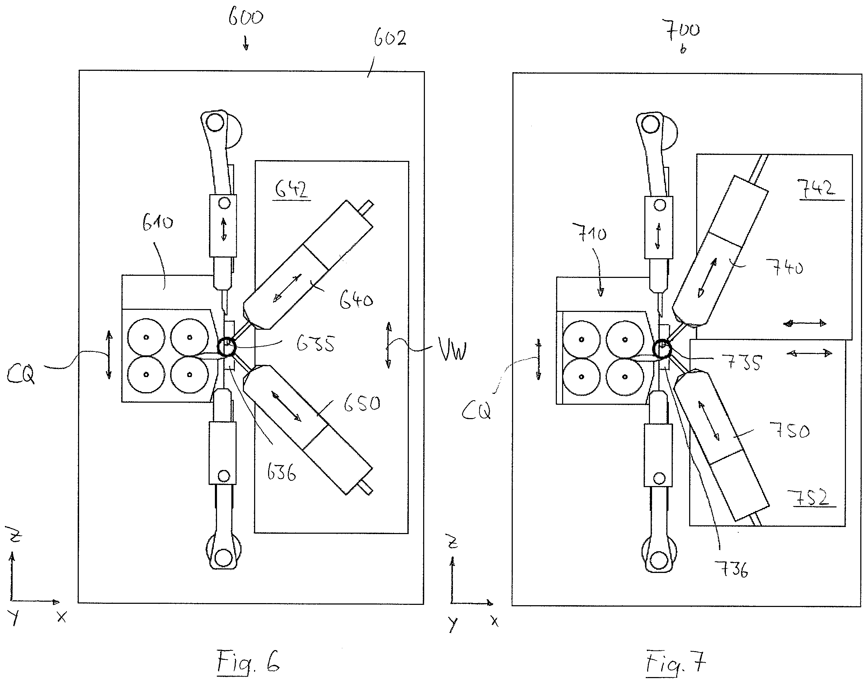

Anhand der Federwindemaschine 600 gemäß der Ausführungsform in Fig. 6 wird eine andere Möglichkeit erläutert, die volle Flexibilität bei der Herstellung unterschiedlichster Schraubenfedern bei Verzicht auf einen verfahrbaren Dornschlitten zu realisieren. Auch bei der Ausführungsform von Fig. 6 ist der Dorn 635 bzw. der den Dorn tragende Dornkasten 636 fest (nicht in Vertikalrichtung verschiebbar) an der vorderen Maschinenwand 602 der Federwindemaschine montiert. Auch Komponenten der Schnitteinrichtungen oberhalb bzw. unterhalb des Dorns müssen nicht vertikal verfahrbar sein, sondern können fest an der Vorderwand montiert sein. Die obere Windeeinheit 640 und die untere Windeeinheit 650 sind auf einer gemeinsamen Windeplatte 642 montiert, die über eine translatorische Maschinenachse programmgesteuert vertikal verfahrbar ist.

Die Flexibilität auf der Drahtzufuhrseite wird hier dadurch erreicht, dass die Zufuhreinrichtung 610 entlang einer vertikalen translatorischen Verfahrrichtung parallel zur z-Richtung des Maschinenkoordinatensystems programmgesteuert verfahrbar ist. Dadurch kann erreicht werden, dass die Drahtzufuhrrichtung jederzeit horizontal bzw. in x-Richtung bzw. in 45° (oder einem anderen Winkel) zu den Windewerkzeugen verläuft. Gleichzeitig kann jedoch die Drahtzufuhr an unterschiedliche Windungsdurchmesser angepasst werden, wobei der Dorn jederzeit an der Innenseite der entstehenden Feder anliegen kann. Auch mit der vertikal verfahrbaren Zufuhreinrichtung kann damit die Forderung einer tangentialen Anlage des Abschneiddorns an der Innenseite der Feder erfüllt und für verschiedenste Federn erreicht werden. Außerdem ist es möglich, bei der Federherstellung jederzeit eine ortsfeste Federmitte zu erzielen (vgl. Fig. 8D und 9D und zugehörige Beschreibung)
Die vertikale Relativbeweglichkeit zwischen dem Dorn und den Windefingern wird bei der Ausführungsform von Fig. 6 dadurch erreicht, dass die Windeeinheiten synchron zueinander durch Verfahren der sie tragenden Windeplatte 642 gemeinsam vertikal verstellt werden können.

Als Alternative wäre es auch möglich, die beiden Windeeinheiten auf einer fest montierten Windeplatte zu installieren und den Dorn bzw. den Dornkasten mit dem Dorn mit Hilfe eines vertikal verfahrbaren Dornschlittens linear verfahrbar auszulegen. Auch dies ist in Kombination mit einer ebenfalls vertikal verfahrbaren Zufuhreinrichtung möglich.

Die Federwindemaschine 700 in Fig. 7 hat ähnlich wie die Ausführungsform in Fig. 6 eine programmgesteuert vertikal verfahrbare Einzugseirichtung 710 und einen fest an der Maschinenvorderwand montierten Dornkasten 736 mit Dorn 735. Ein Dornschlitten ist nicht vorhanden, so dass die Konstruktion geringe Komplexität und große Steifigkeit aufweist. Im Unterschied zur Variante von Fig. 6 sind die obere und die untere Windeeinheit 740 bzw. 750 ähnlich wie bei der konventionellen Maschine in Fig. 3 auf separat ansteuerbaren Windeplatten 742 bzw. 752 montiert und können daher unabhängig voneinander horizontal verfahren werden.

Bei den Ausführungsformen der Figuren 4 bis 7 ist der Dorn jeweils in einem nicht näher dargestellten Dornkasten aufgenommen. Der Dornkasten kann parallel zur Federlängsachse (parallel zur y-Richtung des Maschinenkoordinatensystems) verschoben werden. Diese axiale Verschiebemöglichkeit kann im Herstellungsprozess für die axiale Verschiebung des Abschneiddorns genutzt werden ("axiale Dornverschiebung"), die ggf. mit einem Servomotor angetrieben werden kann. Die Funktion "axiales Dornverschieben" wird z.B. bei der Herstellung von Formfedern genutzt, wenn es während des Herstellungsprozesses zu Kollisionen des Drahts mit dem Abschneiddorn kommen würde. In diesem Fall wird der Abschneiddorn durch die axiale Bewegung des Dornkastens aus dem Kollisionsbereich der Feder herausgefahren. Nach dem Formen der Feder wird zum Abschneiden der Feder der Abschneiddorn mit dem Dornkasten wieder in die Schnittposition gefahren.

Anhand der Fig. 8 und 9 werden unterschiedliche Stellungen der Windewerkzeuge bzw. Windestifte für unterschiedliche Federdurchmesser gemeinsam mit der zugehörigen Stellung des Dorns und der jeweiligen Position der Federachse dargestellt, um die koordinierten Arbeitsbewegungen der zugeordneten Maschinenachsen bei der Federherstellung zu erläutern. In allen Teilfiguren von Fig. 8 und 9 wird der Draht DR von links mittels einer (nicht gezeigten) Zufuhreinrichtung parallel zu einer Zuführrichtung DZ mit vorgebbarer Vorschubgeschwindigkeit der Umformeinrichtung zugeführt. Die Umformeinrichtung hat eine obere Windeeinheit WEO mit dem oberen Windewerkzeug (Windestift) WZO und eine untere Windeeinheit WEU mit dem unteren Windewerkzeug WZU. Der im Querschnitt halbkreisförmige Dorn DO bildet die vertikale Schneidkante SK, die mit dem vertikal verfahrbaren Schnittwerkzeug SW beim Abtrennvorgang zusammenwirkt. Jede Windung der Feder definiert die Lage des Federzentrums FZ bzw. der Federmitte als Mittelpunkt des Kreises, der durch die Federwindung definiert wird. Die Bezugszeichen BK beziehen sich jeweils auf die Bahnkurve der Position, in der sich der Berührpunkt zwischen Windewerkzeug und Draht bewegt, wenn sich der Federdurchmesser ändert. Diese Bezeichnungen gelten für alle Teilfiguren in Fig. 8 und 9. Fig. 8 zeigt jeweils die relativen Positionen bei der Herstellung von rechtsgängigen Federn, während Fig. 9 entsprechende Positionen bei der Herstellung von linksgängigen Federn zeigt.

Fig. 8A zeigt die relativen Maschinenachsenbewegungen bei der Herstellung einer rechtsgängigen Feder bei einer konventionellen Federwindemaschine, bei der der Dorn DO mittels des vertikal verfahrbaren Dornschlittens vertikal verfahrbar ist und die Windeeinheiten unabhängig voneinander verfahren werden können (vgl. Fig. 3). Da die Zufuhreinrichtung ortsfest, d.h. nicht verfahrbar, montiert ist, bleibt die Drahtzuführrichtung DZ bei allen Federdurchmessern bezüglich Lage und Orientierung unverändert, so dass der Draht DR in einer bestimmten Höhe horizontal und immer parallel zur x-Richtung des Maschinenkoordinatensystems zugeführt wird. Es ist erkennbar, dass der Dorn DO bei der Herstellung von Federwindungen mit zunehmend größeren Durchmessern immer weiter nach oben verfahren werden muss, damit der Dorn jederzeit an der Innenseite der sich entwickelnden Federwindung anliegt. Die Position des Federzentrums FZ verschiebt sich mit zunehmendem Windungsdurchmesser ebenfalls nach oben. Die obere Windeeinheit und die untere Windeeinheit benötigen eigene Freiheitsgrade, um jederzeit die radiale Abstützung der Federwindung mit Hilfe der Windewerkzeuge zu gewährleisten. Bei der Herstellung von Formfedern mit unterschiedlichen Windungsdurchmessern in Achsrichtung sind die Verfahrbewegungen der entsprechenden Maschinenachsen über die Steuereinheit phasenrichtig zu koordinieren. Bei der Umstellung der Federmaschine auf die Fertigung von Federn mit zylindrischem Federdurchmesser sind die Verfahrbewegungen ebenfalls durchzuführen, wobei jedoch die zeitliche Koordination entfallen kann.

Entsprechende Situationen ergeben sich bei der Herstellung von linksgängigen Federn gemäß Fig. 9A.

In den Fig. 8B, 9B sind Maschinenachsenbewegungen für den Fall einer Federwindemaschine gezeigt, die eine Zufuhreinrichtung hat, welche um eine horizontale Schwenkachse verschwenkbar ist und bei der weiterhin der Dorn DO an einem vertikal verfahrbaren Dornschlitten angebracht ist (vgl. Fig. 4). Es ist erkennbar, dass die Drahtzufuhrrichtung DZ durch Verschwenken der Zufuhreinrichtung in Abhängigkeit vom Durchmesser der zu erzeugenden Federwindung jeweils so eingestellt werden kann, dass die Drahtzufuhrrichtung tangential zur aktuellen Federwindung verläuft. Für größere Durchmesser wird die Zufuhreinrichtung also weiter nach unten verschwenkt als bei kleineren Durchmessern. Um sicherzustellen, dass der Dorn DO zu jeder Zeit unabhängig vom Windungsdurchmesser an der Innenseite einer Federwindung anliegt, wird der Dornschlitten mit dem daran angebrachten Dorn DO vertikal verfahren. Bei dieser Vorgehensweise bleibt die Position des Federzentrums FZ bzw. der Federmitte in Bezug auf das Maschinenkoordinatensystem unabhängig vom Windungsdurchmesser konstant. Gleichzeitig benötigen die Windeeinheiten WEO und WEU jeweils nur einen translatorischen Freiheitsgrad, nämlich die lineare Verfahrbewegung in der z.B. um 45° zur Horizontalen geneigten Verfahrrichtung. Da die Federachse FZ eine feste Position einnimmt (Fig. 8B bei rechtsgängiger Feder und Fig. 9B bei linksgängiger Feder) und die Windeeinheiten sich dadurch immer auf derselben Bahnkurve BK bewegen, ist unabhängig davon, welcher Federdurchmesser oder welche Wickelrichtung hergestellt werden muss, kein zusätzlicher Freiheitsgrad der Bewegung auf Seiten der Umformwerkzeuge notwendig (vgl. Ausführungsform in Fig. 4).

Die Fig. 8C und 9C veranschaulichen Verfahrbewegungen von Maschinenachsen bei einer Ausführungsform entsprechend Fig. 5, bei der der Dorn DO ortsfest am Maschinenkörper angebracht ist und bei dem weiterhin ein um eine horizontale Schwenkachse verschwenkbare Zufuhreinrichtung vorgesehen ist. Bei dieser Ausgestaltung, die keinen verfahrbaren Dornschlitten benötigt, werden die Anpassungen an unterschiedliche Federwindungsdurchmesser durch zusätzliche Freiheitsgrade auf Seiten der Windeeinheiten WEO und WEU geschaffen, indem die Windeeinheiten gemeinsam auf einer Windeplatte montiert sind, die eine programmgesteuerte Vertikalbewegung relativ zum ortsfesten Dorn DO erlaubt. Die Federherstellung bei dieser Konstruktion wird unabhängig vom aktuellen Federdurchmesser immer so gesteuert, dass die aktuelle Federwindung direkt am Dorn entlangläuft und sich somit jederzeit in der Schnittposition befindet. Die relative Positionierung des Drahts zum ortsfesten Dorn wird durch die Schwenkbewegung der Zufuhreinrichtung ermöglicht.

Die Fig. 8D und 9D veranschaulichen die Verfahrbewegungen der Windeeinheiten und der Zufuhreinrichtung bei einer Ausführungsform entsprechend Fig. 6, bei der die Zufuhreinrichtung programmgesteuert vertikal linear verfahrbar ist, so dass die Drahtzufuhrrichtung DZ immer horizontal (parallel zur x-Richtung des Maschinenkoordinatensystems) verläuft, aber in unterschiedlicher Höhe erfolgen kann. Hier wird bei der Herstellung von Federn unterschiedlicher Durchmesser die vertikale Position der Zufuhreinrichtung immer so gesteuert, dass der zugeführte Draht in tangentialer Richtung zur aktuellen Federwindung verläuft. Der Dorn steht dabei immer in Anlagekontakt mit der aktuellen Federwindung. Zur Erzeugung von Federwindungen unterschiedlicher Durchmesser wird die Zufuhreinrichtung entsprechend vertikal verfahren und auch die Windeeinheiten werden synchron vertikal verfahren, was bei der Ausführungsform von Fig. 6 dadurch realisiert ist, dass beide Windeeinheiten auf einer gemeinsamen, vertikal verfahrbaren Windeplatte montiert sind.

Es ist auch möglich, mit Hilfe eines vertikal verfahrbaren Einzugs ein ortsfestes Federzentrum zu realisieren. Hierzu kann der verfahrbare Einzug mit einem ebenfalls verfahrbaren Dorn kombiniert werden, der von einem Dornschlitten getragen wird.

## Patentansprüche

1. Verfahren zur Herstellung von Federn mittels einer numerisch gesteuerten Federmaschine, worin ein Draht unter der Steuerung durch ein Steuerprogramm durch eine Zufuhreinrichtung (110, 410, 510, 610, 710) einer Umformeinrichtung der Federmaschine in einer Zufuhrrichtung (DZ) zugeführt und mit Hilfe von Werkzeugen der Umformeinrichtung in einer Umformoperation zu einer Feder umgeformt wird,
wobei die Umformeinrichtung einen Dorn (130, 435, 535, 635, 735, DO) mit einer senkrecht zur Zufuhrrichtung ausgerichteten Dornachse aufweist und Windungen der Feder den Dorn bei der Umformoperation umschließen,
wobei die Lage und/oder die Orientierung der Zufuhreinrichtung mit Hilfe einer steuerbaren Maschinenachse während der Umformoperation verstellt wird,
**dadurch gekennzeichnet, dass**
bei der Umformoperation eine Feder mit Wicklungen unterschiedlicher Wicklungsdurchmesser erzeugt wird, wobei die Lage und/oder Orientierung der Zufuhreinrichtung (110, 410, 510, 610, 710) während der Umformoperation derart verändert wird, dass die durch die Zufuhreinrichtung definierte Zufuhrrichtung immer im Wesentlichen tangential zu einer gerade entstehenden Wicklung der Feder verläuft.

2. Verfahren nach Anspruch 1, worin bei der Umformoperation eine Feder mit Wicklungen unterschiedlicher Wicklungsdurchmesser erzeugt wird und worin der Dorn während der Umformoperation keine Bewegungen senkrecht zur Dornachse ausführt.

3. Verfahren nach einem der Ansprüche 1 oder 2, worin die Federmaschine als Federwickelmaschine (100) konfiguriert ist und der Dorn ein Wickeldorn (130) ist, der mittels einer rotatorischen Maschinenachse um die Dornachse gedreht werden kann und bei der Umformoperation um die Dornachse gedreht wird, wobei vorzugsweise bei der Umformoperation eine Spiralfeder erzeugt wird.

4. Verfahren nach Anspruch 3, worin vor Beginn der Herstellung einer Spiralfeder die Lage und/oder Orientierung der Zufuhreinrichtung (110) so eingestellt wird, dass ein vorderes Drahtende in einen Querschlitz (132) des Wickeldorns (130) eingeführt werden kann, danach der Draht mittels der Zufuhreinrichtung in den Querschlitz eingeführt wird und danach die weitere Umformoperation erfolgt, indem der Draht unter Drehung des Wickeldorns gewickelt wird, wobei vorzugsweise während des Wickelns die Lage und/oder die Orientierung der Zufuhreinrichtung derart verändert werden, dass die durch die Zufuhreinrichtung definierte Zufuhrrichtung immer im Wesentlichen tangential zu einer gerade entstehenden Wicklung der Feder verläuft.

5. Federmaschine (100, 400, 500, 600, 700) zur Herstellung von Federn durch Federwinden oder Federwickeln unter der Steuerung durch ein Steuerprogramm umfassend:
mehrere steuerbare Maschinenachsen,
eine Steuereinrichtung (180) zur koordinierten Steuerung von Achsbewegungen der Maschinenachsen der Federmaschine auf Basis eines Steuerprogramms;
eine Zufuhreinrichtung (110, 410, 510, 610, 710) zum Zuführen von Draht (DR) in einer Zufuhrrichtung (DZ) in den Bereich einer Umformeinrichtung der Federmaschine; und
einen Dorn (130, 435, 535, 635, 735, DO) mit einer senkrecht zur Zufuhrrichtung ausgerichteten Dornachse, wobei der Dorn derart positioniert oder positionierbar ist, dass Windungen der Feder den Dorn bei der Umformoperation umschließen,
wobei die Zufuhreinrichtung (110, 410, 510, 610, 710) eine verstellbare Zufuhreinrichtung ist, bei der die Lage und/oder die Orientierung der Zufuhreinrichtung mit Hilfe einer der steuerbaren Maschinenachsen während der Erzeugung einer Feder verstellbar ist,
**dadurch gekennzeichnet, dass**
die der Zufuhreinrichtung (110, 410, 510, 610, 710) zugeordnete Maschinenachse derart steuerbar ist, dass eine durch die Zufuhreinrichtung definierte Zufuhrrichtung (DZ) bei einer Umformoperation für eine Feder mit Wicklungen unterschiedlicher Wicklungsdurchmesser immer im Wesentlichen tangential zu einer gerade entstehenden Wicklung der Feder verläuft.

6. Federmaschine nach Anspruch 5, worin die Federmaschine als Federwickelmaschine (100) konfiguriert ist und der Dorn ein Wickeldorn (130) ist, der mittels einer rotatorischen Maschinenachse um die Dornachse (135) drehbar ist, wobei vorzugsweise der Wickeldorn zusätzlich mittels einer translatorischen Maschinenachse parallel zur Dornachse verfahrbar ist.

7. Federmaschine nach einem der Ansprüche 5 oder 6, **dadurch gekennzeichnet, dass** sie zur Durchführung des Verfahren nach einem der Ansprüche 1 bis 4 konfiguriert ist.

## Claims

1. Method for manufacturing springs by means of a numerically controlled spring machine, in which a wire is fed in a feed direction (DZ) to a forming device of the spring machine by a feed device (110, 410, 510, 610, 710) under the control of a control program and is formed into a spring with the aid of tools of the forming device in a forming operation,
wherein the forming device has a mandrel (130, 435, 535, 635, 735, DO) with a mandrel axis oriented at right angles to the feed direction, and coils of the spring surround the mandrel during the forming operation,
wherein the position and/or the orientation of the feed device is/are adjusted with the aid of a controllable machine axis during the forming operation,
**characterized in that**
a spring having windings of different winding diameter is produced during the forming operation, wherein the position and/or orientation of the feed device (110, 410, 510, 610, 710) is/are changed during the forming operation in such a way that the feed direction defined by the feed device always extends substantially tangentially to a winding of the spring just being produced.

2. Method according to Claim 1, wherein a spring having windings of different winding diameter is produced during the forming operation, and wherein the mandrel does not move at right angles to the mandrel axis during the forming operation.

3. Method according to Claim 1 or 2, wherein the spring machine is designed as a spring winding machine (100) and the mandrel is a winding mandrel (130) which can be rotated about the mandrel axis by means of a rotary machine axis and is rotated about the mandrel axis during the forming operation, wherein preferably during the forming operation a spiral spring is produced.

4. Method according to Claim 3, wherein before manufacture of a spiral spring is begun, the position and/or orientation of the feed device (110) is/are set in such a way that a front wire end can be introduced into a transverse slit (132) in the winding mandrel (130), after which the wire is then introduced into the transverse slit by means of the feed device, and after which the further forming operation then takes place, in which the wire is wound as the winding mandrel is rotated, the position and/or the orientation of the feed device preferably being changed during the winding process in such a way that the feed direction defined by the feed device always extends substantially tangentially to a winding of the spring just being produced.

5. Spring machine (100, 400, 500, 600, 700) for manufacturing springs by spring winding or spring coiling under the control of a control program, said spring machine comprising:
a plurality of controllable machine axes;
a control device (180) for coordinated control of axial movements of the machine axes of the spring machine on the basis of a control program;
a feed device (110, 410, 510, 610, 710) for feeding wire (DR) in a feed direction (DZ) in the region of a forming device of the spring machine; and
a mandrel (130, 435, 535, 635, 735, DO) with a mandrel axis oriented at right angles to the feed direction, the mandrel being positioned or positionable in such a way that coils of the spring surround the mandrel during the forming operation,
wherein the feed device (110, 410, 510, 610, 710) is an adjustable feed device in which the position and/or the orientation of the feed device is/are adjustable with the aid of one of the controllable machine axes during production of a spring,
**characterized in that**
the machine axis associated with the feed device (110, 410, 510, 610, 710) is controllable in such a way that, during a forming operation for a spring having windings of different winding diameters, a feed direction (DZ) defined by the feed device always extends substantially tangentially to a winding of the spring just being produced.

6. Spring machine according to Claim 5, wherein the spring machine is designed as a spring winding machine (100) and the mandrel is a winding mandrel (130) which can be rotated about the mandrel axis (135) by means of a rotary machine axis, the winding mandrel preferably additionally being movable parallel to the mandrel axis by means of a translatory machine axis.

7. Spring machine according to any of Claims 5 or 6, **characterized in that** the spring machine is configured to carry out the method according to one of Claims 1 to 4.

## Revendications

1. Procédé de production de ressorts à l'aide d'une machine de production de ressorts à commande numérique, dans lequel un fil métallique est amené de manière pilotée par un programme de commande par un dispositif d'alimentation (110, 410, 510, 610, 710) à un dispositif de formage de la machine de production de ressorts selon une direction d'amenée (DZ), ledit fil métallique étant mis sous la forme d'un ressort par des outils dudit dispositif de formage dans le cadre d'une opération de formage,
dans lequel le dispositif de formage présente un mandrin (130, 435, 535, 635, 735, DO) dont l'axe est perpendiculaire à la direction d'amenée et dans lequel des spires du ressort entourent ledit mandrin dans le cadre de l'opération de formage,
dans lequel la position et/ou l'orientation du dispositif d'alimentation sont réglées à l'aide d'un axe mécanique de machine gouvernable pendant l'opération de formage,
**caractérisé en ce que**,
dans le cadre de l'opération de formage, un ressort est produit avec des enroulements de diamètres d'enroulement différents, la position et/ou l'orientation du dispositif d'alimentation (110, 410, 510, 610, 710) étant modifiées pendant l'opération de formage de sorte que la direction d'amenée définie par ledit dispositif d'alimentation soit toujours essentiellement tangentielle à un enroulement du ressort venant d'être formé.

2. Procédé selon la revendication 1 dans lequel, pendant l'opération de formage, un ressort est produit avec des enroulements de diamètres d'enroulement différents et dans lequel le mandrin n'effectue aucun mouvement perpendiculaire à son axe pendant l'opération de formage.

3. Procédé selon l'une quelconque des revendications 1 ou 2, dans lequel la machine de production de ressorts est configurée en tant que machine à enrouler les ressorts (100) et dans lequel le mandrin est un mandrin d'enroulement (130) qui, au moyen d'un axe mécanique de machine rotatif, peut être mis en rotation autour de son axe de mandrin et qui, dans le cadre de l'opération de formage, tourne autour de son axe de mandrin, ladite opération de formage produisant de préférence un ressort hélicoïdal.

4. Procédé selon la revendication 3, dans lequel, avant que ne commence la production d'un ressort hélicoïdal, la position et/ou l'orientation du dispositif d'alimentation (110) sont réglées de sorte qu'une extrémité avant de fil métallique puisse être introduite dans une fente transversale (132) du mandrin d'enroulement (130), que le fil métallique soit ensuite introduit dans la fente transversale au moyen du dispositif d'alimentation, qu'intervienne ensuite l'opération de formage suivante dans laquelle ledit fil métallique est enroulé sous l'effet de la rotation du mandrin d'enroulement, la position et/ou l'orientation du dispositif d'alimentation étant modifiées, de préférence pendant l'enroulement, de sorte que la direction d'amenée définie par le dispositif d'alimentation soit toujours essentiellement tangentielle à un enroulement du ressort venant d'être formé.

5. Machine de production de ressorts (100, 400, 500, 600, 700) pour la production de ressorts par bobinage ou enroulement de ressorts de manière pilotée par un programme de commande et comprenant :
plusieurs axes mécaniques de machine gouvernables ;
un dispositif de commande (180) pour la commande coordonnée des mouvements des axes mécaniques de ladite machine de production de ressorts selon un programme de commande ;
un dispositif d'alimentation (110, 410, 510, 610, 710) destiné à amener le fil métallique (DR) selon une direction d'amenée (DZ) dans la région d'un dispositif de formage de la machine de production de ressorts ; et
un mandrin (130, 435, 535, 635, 735, DO) dont l'axe est perpendiculaire à la direction d'amenée et étant ou pouvant être positionné de sorte que les spires du ressort entourent ledit mandrin dans le cadre de l'opération de formage,
dans laquelle le dispositif d'alimentation (110, 410, 510, 610, 710) est un dispositif d'alimentation dont la position et/ou l'orientation peuvent être réglées à l'aide d'un des axes mécaniques de machine gouvernables pendant la production d'un ressort,
**caractérisée en ce que**
l'axe mécanique de machine associé au dispositif d'alimentation (110, 410, 510, 610, 710) peut être commandé de sorte que, dans le cadre d'une opération de formage d'un ressort dont les enroulements présentent des diamètres d'enroulement différents, une direction d'amenée (DZ) définie par ledit dispositif d'alimentation soit toujours essentiellement tangentielle à un enroulement du ressort venant d'être formé.

6. Machine de production de ressorts selon la revendication 5, configurée en tant que machine à enrouler les ressorts (100) et dans laquelle le mandrin est un mandrin d'enroulement (130) qui peut tourner autour de son axe (135) au moyen d'un axe mécanique de rotation de la machine, ledit mandrin d'enroulement pouvant en outre et de préférence se déplacer parallèlement à l'axe du mandrin au moyen d'un axe mécanique de translation de la machine.

7. Machine de production de ressorts selon l'une quelconque des revendications 5 ou 6, **caractérisée en ce qu'**elle est configurée pour exécuter le procédé selon l'une quelconque des revendications 1 à 4.
